# EUROPEAN PATENT APPLICATION

(11) **EP 1 926 101 A1**
(43) Date of publication of application: **28.05.2008**
(21) Application number: 06797652.2
(22) Date of filing: 01.09.2006
(51) Int. Cl.: G11B 20/10, G06F 13/00, G10K 15/02, G11B 27/10

(54) **MEDIA SERVER DEVICE, MEDIA SERVER CONTROL METHOD, AND PROGRAM**

(30) Priority: 01.09.2005 JP 2005254215
(71) Applicant: Kabushiki Kaisha Kenwood, Hachiouji-shi, Tokyo 192-8525 (JP)
(72) Inventor: SEKIGUCHI, Satoru, Tokyo 192-0031 (JP); SONODA, Yoshio, Kanagawa 229-1117 (JP); NAKAMURA, Isao, Kanagawa 240-0045 (JP); FURUKAWA, Masamichi, Tokyo 192-0045 (JP); MASHITA, Yoshihisa, Tokyo 187-0031 (JP); YOSHIDA, Tomoaki, Tokyo 191-0055 (JP); WATANABE, Masahito, Sagamihara-shi, Kanagawa 2290003 (JP)
(74) Representative: Leinweber & Zimmermann
(86) International application number: PCT/JP2006/317796
(87) International publication number: WO 2007/026964

(57) **Abstract**

A media server device (40) can reproduce each of music compositions held in a built-in storage device (45). Moreover, the media server device (40), while being connected, can stream-distribute a digital content to a network player (51) so as to be reproduced in the network player (51). Reproduced digital content detection means (41) detects a music composition being reproduced. Stream-distribution means (42) stream-distributes data for reproducing the currently reproduced music composition as a notification music composition in the network player (51). Thus, it is possible to provide a media server device, a media server control method, and a program capable of enabling a particular partner to understand the reproduced digital content effectively and in the reproduction format.

## Description

### TECHNICAL FIELD

The present invention relates to a media server device, a media server control method, and a program capable of freely reproducing a stored digital content and being connected to a network individually.

### BACKGROUND ART

In a DLNA (digital living network alliance), a guideline for guaranteeing the mutual compatibility among electric appliances, PCs, and mobile equipment is prescribed. When an equipment unit in accordance with the guideline is connected to a user home network, they are mutually connected to share digital contents such as music, photos, moving pictures, etc. It is predicted that the equipment unit in accordance with the DLNA is used not only over a domestic network but also over an onboard network in the future. The network to which an equipment unit in accordance with the DLNA is connected is hereinafter referred to as a "DLNA network".

On the other hand, the HDD portable player is carried by a user, and stores a great number of music pieces on the HDD (hard disk device) so that music pieces can be reproduced. As a usage aspect of the HDD portable player, a user connects his or her HDD portable player to his or her home or vehicle DLNA network through a wireless LAN or a cable LAN, and can reproduce in a network player and listen to a music piece stored on the HDD portable player alone or as a group of his or her family members or friends.

The Japanese Patent Application Laid-Open No. 2000-207845 discloses storing music data on a CD and an MD after converting the data according to the standard such as an MP3 on a recording medium such as an onboard hard disk etc., reading the music data in the recording medium in a time sharing system, and allowing each passenger to concurrently listen to a different music piece.

### DISCLOSURE OF THE INVENTION

For example, when persons who have an acquaintance with each other hold their own HDD portable players and are located in points where they can communicate with each other, and when a person is reproducing a music piece in his or her own HDD portable player, there can be a case where another person asks to know the title of the music piece being reproduced, and the reproducing person wants to tell the title to the asking person.

With the conventional HDD portable player, in the case above, the title of the music piece and the name of the artist are transmitted orally, by a memo, or by temporarily lending a headphone to the other person, thereby notifying the other person of the reproduced music piece.

In the reproduction system according to the Japanese Patent Application Laid-Open No. 2000-207845, each person listens to a different music piece, but each person has only means similar to what is described with reference to the conventional HDD portable player to notify a partner of the music piece being listened to by the person.

The present invention aims at providing a media server device, a media server control method, and a program capable of notifying a specific partner of reproduced digital contents effectively in the reproduction format.

A media server device according to the present invention can individually reproduce digital contents stored in a built-in storage device, and allows the stream-distribution of digital contents to a network player for reproduction in the network player during connection to the network. The media server device includes:
reproduced digital contents detection means for detecting digital contents currently being reproduced; and
stream-distribution means for stream-distributing data for reproducing notification digital contents by a network player using the currently reproduced digital contents as the notification digital contents to a predetermined network player.

Another media server device according to the present invention can individually reproduce digital contents stored in a built-in storage device, and allows the stream-distribution of digital contents to a network player for reproduction in the network player during connection to the network. The other media server device includes:
data read means for reading data of digital contents relating to the reproduction of contents individually by a media server device from the built-in storage device;
reproduction means for allowing the media server device to individually reproduce digital contents based on the data read from the built-in storage device as data of the digital contents relating to the reproduction individually by the media server device; and
stream-distribution means for stream-distributing to a network player the data read from the built-in storage device as data of the digital contents relating to the reproduction individually by the media server device.

The media server device to which a control method of the present invention is applied can individually reproduce digital contents stored in a built-in storage device, and stream-distribute digital contents to a network player for reproduction in the network player during connection to the network. The control method of the present invention includes:
a step of detecting digital contents currently being reproduced; and
a step of stream-distributing data for reproducing notification digital contents by a network player using the currently reproduced digital contents as the notification digital contents to a predetermined network player.

The program according to the present invention directs a computer to function as each means of each of the above-mentioned media server devices. The program according to the present invention directs the computer to perform each step of the control method.

According to the present invention, a user of a media server device can direct a network player of his or her acquaintance to directly reproduce digital contents currently being reproduced and transmit the information about the contents to the acquaintance.

### BRIEF DESCRIPTION OF THE DRAWINGS

FIG. 1 is a front view of an HDD portable player;
FIG. 2 is an explanatory view showing an example of the movement of an HDD portable player;
FIG. 3 shows the situation of the network to which an HDD portable player is connected;
FIG. 4 shows the structure to administer the contents in the HDD of the HDD portable player;
FIG. 5 is a block diagram of a portable media player;
FIG. 6 is a block diagram of a more practical media server device;
FIG. 7 is a flowchart of the portable media player control method; and
FIG. 8 is a block diagram of another media server device.

### BEST MODES FOR CARRYING OUT THE INVENTION

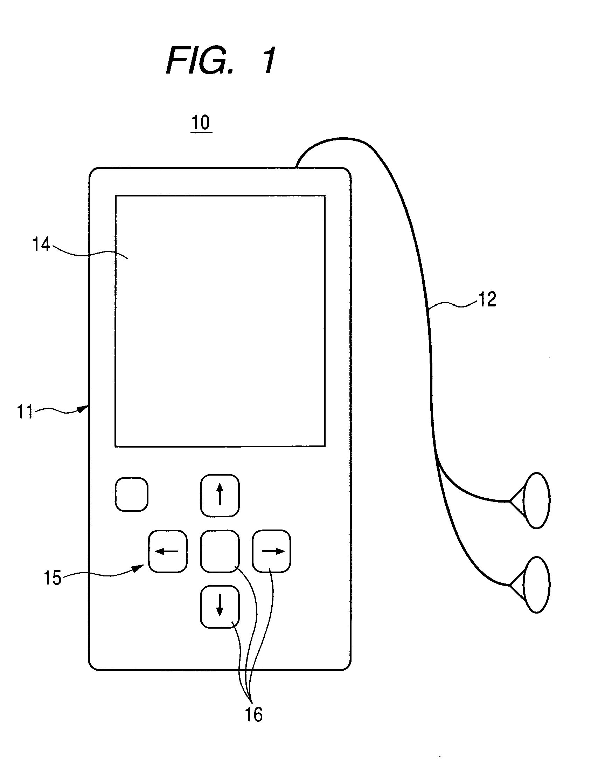

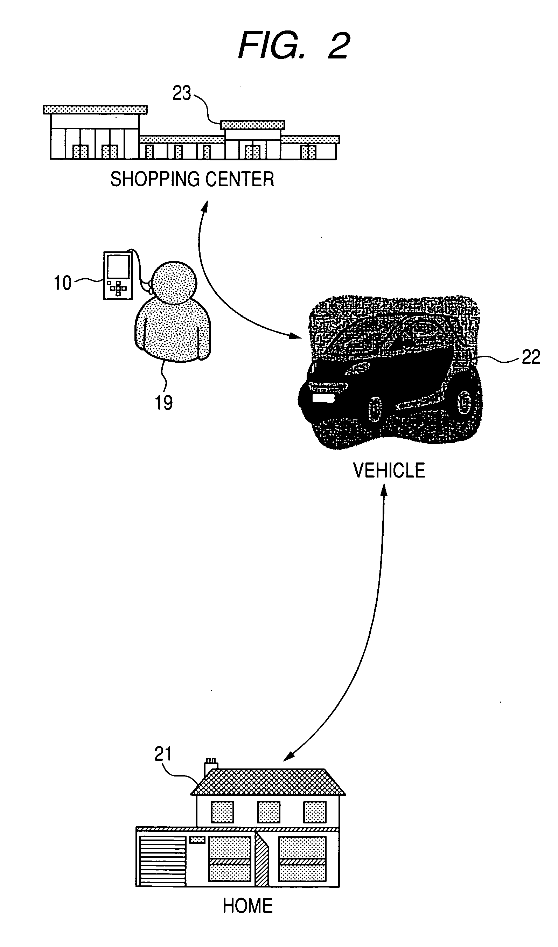

FIG. 1 is a front view of an HDD portable player 10. The HDD portable player 10 includes a body 11 and a headphone 12 capable of freely inserting and removing its jack into and from the body 11 and has its dimensions and weight that enable the HDD portable player 10 to be carried by a user 19 (FIG. 2) in his or her pocket etc. The HDD portable player 10 is driven by the power of its built-in battery, and the built-in battery can be appropriately charged. On the front surface of the body 11, a color LCD 14 and an operation key array unit 15 are arranged at the upper and lower portions of the body 11 respectively. The operation key array unit 15 includes a plurality of operation keys 16. The HDD (not shown in the attached drawings) of the HDD portable player 10 records a number of music pieces in a predetermined format, and the music pieces are appropriately reproduced. The HDD portable player 10 is provided with a built-in radio for a wireless LAN.

The user 19 has the body 11 by one hand, and operates the operation keys 16 by the other hand, thereby issuing various indications to the HDD portable player 10 to start selecting and reproducing a desired music piece. The user 19 inserts the right and left units of the headphones 12 into the right and left ears respectively, thereby listening to the reproduced sound of music.

FIG. 2 is an explanatory view showing an example of the movement of the HDD portable player 10. A DLNA network is built in home 21 and a vehicle 22. The user 19 drives, for example, the vehicle 22 from the home 21 to a shopping center 23, parks the vehicle 22 at a parking lot of the shopping center 23, and does shopping in the shopping center 23. The user 19 carries the HDD portable player 10 into the vehicle 22. In the home 21 or vehicle 22, the user 19 issues an indication to reproduce a music piece stored in the HDD portable player 10 from the network player in the home 21 or the vehicle 22 using the network in the home 21 or the vehicle 22, and can listen to the music piece through the speaker for the network player. The user 19 can use the HDD portable player 10 individually in the home 21, the vehicle 22, and the shopping center 23 to appropriately listen to the music pieces stored in the HDD portable player 10 through the headphone 12.

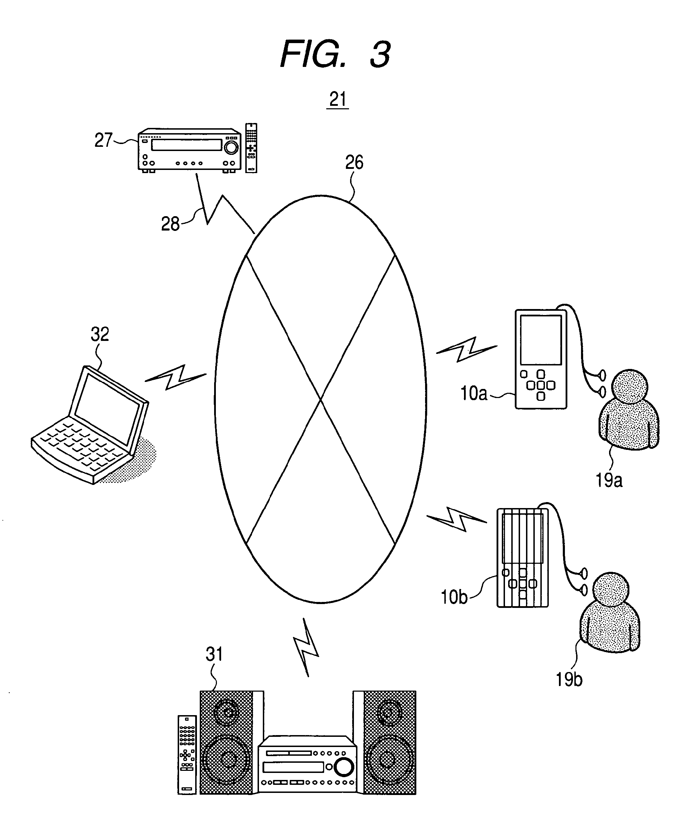

FIG. 3 shows the situation of a network 26 to which HDD portable players 10a and 10b are connected. The HDD portable players 10a and 10b are belongings to users 19a and 19b respectively, and the same as the HDD portable player 10. A network 26 is structured in, for example, the home 21 as a DLNA network. A network player 27 is connected to the network 26 through a LAN cable 28. The HDD portable players 10a and 10b, a network player 31, and a personal computer 32 are connected to the network 26 by wireless. The personal computer 32 is available as a server and a client. The HDD portable players 10a and 10b can be servers in distributing a music piece, pictures, and other contents to the network players 27 and 31. For example, the HDD portable player 10a is a server which transmits data to the network player 28, and the HDD portable player 10b is a player which receives data from a personal computer operating as a server.

Relating to the DLNA network, an equipment unit that distributes a music piece is referred to as a "DMS (digital media server)". An equipment unit that receives a distribution of a music piece is referred to as a "DMP (digital media player)". In FIG. 3, since the HDD portable player 10a distributes a music piece to the HDD portable player 10b and the network players 27 and 31, it is a DMS. Since the HDD portable player 10b and the network players 27 and 31 receive a distribution of a music piece from the HDD portable player 10a, it is a DMP. The HDD portable player 10a can include not only the function as a DMS, but also the function of the DMP. In addition, the HDD portable player 10b can include not only the function as a DMP, but also the function of the DMS. In this case, the HDD portable players 10a and 10b can alternately be a DMS and a DMP.

Both the HDD portable players 10a and 10b can be servers, but the case described below shows the HDD portable player 10a as a server to the network player 27 or 31. The case above is similar to the case in which the HDD portable player 10b functions as a server to the network player 27 or 31. For the convenience of explanation, listening to music pieces stored in the HDD portable player 10a through the headphone 12 is hereinafter referred to as "self-reproduction", and listening to the music pieces through the network player such as the network players 27 and 31, etc. through the network such as the network 26 etc. is hereinafter referred to as "network reproduction". For example, if the network player 27 is placed in the living room of the home 21, and the network player 31 is placed in the bed room of the home 21, then the user can listen to the music pieces stored in the HDD portable player 10a in the network reproduction in both the network player 27 in the living room and the network player 31 in the bed room.

Described below is the case where the music pieces stored in the HDD portable player 10a are network-reproduced in the network player 27. It is assumed that the network player 27 is provided for the home 21 and the vehicle 22.

A user operates the network player 27 to request the HDD portable player 10a to transmit the list information about the music pieces stored in the HDD portable player 10a. At the request, the HDD portable player 10a transmits the list information to the network player 27 through the network 26. The user of the network player 27 specifies the desired music piece to be reproduced by referring to the list of music pieces displayed on the display unit of the network player 27 according to the list information received from the HDD portable player 10a. At the user specification, the network player 27 requests the HDD portable player 10a to transmit the data of the specified music piece. At the request, the HDD portable player 10a transmits the corresponding data to the network player 27 by the stream-distribution. Since the output speed of the reproduced sound by the network player 27 is lower in data amount conversion than the transmission speed of the data by the stream-distribution, the data relating to one music piece is transmitted by a predetermined amount at each data transmission request intermittently issued by the network player 27 in the stream-distribution.

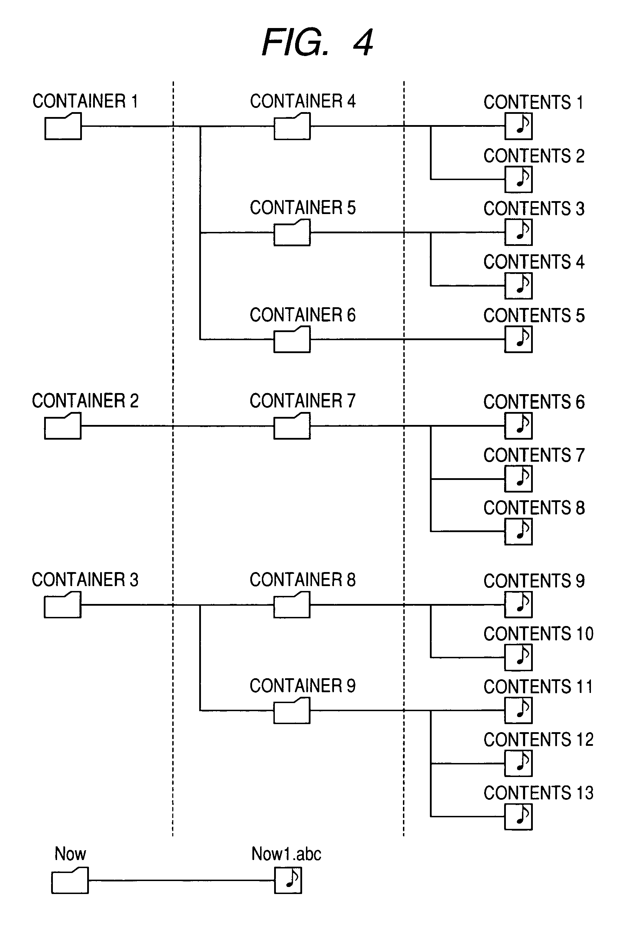

Before describing the system of the HDD portable player 10a notifying the HDD portable player 10b of the stored music pieces, the description is given with reference to FIG. 4. FIG. 4 shows the structure to administer the contents in the HDD of the HDD portable player 10. Relating to the UPnP/DLNA, the "contents" are referred to as items. "Now" and "Now1.abc" will be described later. Containers 1 to 3 are generated in the first layer below the root. Containers 4 to 9 are generated in the second layer. Contents 1 to 13 are generated in the third layer. The membership between a container and a content is shown in FIG. 4.

For example, each container in the first layer corresponds to an artist, and each container in the second layer corresponds to an album. A content is not limited to a music piece, but can be other contents to be reproduced such as pictures including moving pictures. One content corresponds to one track of a musical CD, and corresponds to one or more chapters of a DVD for video.

Back in FIG. 3, the system of the HDD portable player 10a notifying the HDD portable player 10b of the music pieces stored in the HDD portable player 10a will be described. The user 19b can ask the user 19a "Will you recommend any fantastic music piece?", "What is your favorite music piece lately?", or "What music piece did you buy recently?" In addition, the user 19a may request to inform the user 19b of his or her own favorite music piece etc. regardless of the inquiry from the user 19b. The user 19a informs the user 19b of the information about the music piece to be told to the user 19b by allowing the music piece to be reproduced by the HDD portable player 10b. The system of the HDD portable player 10b notifying the HDD portable player 10a of a stored music piece on the HDD portable player 10b is the same as the above-mentioned system.

In the CDS (content directory service) defined in the UPnP AVProtocol, the metadata in the list information format is regulated. The HDD portable player 10a can use the metadata to display on the HDD portable player 10a a list of the contents stored by the HDD portable player 10a.

Under the restrictions above, to transmit resume information from the HDD portable player 10a to the HDD portable player 10b, the container named, for example, "Now" is generated in the first layer in the system shown in FIG. 4, and a content named, for example, "Now1.abc" is generated in the container. Thus, on the display unit of the HDD portable player 10b, the container "Now" and the content "Now1" are displayed as other containers 1 to 9 and contents 1 to 13. "Now" and "Now1.abc" are provisional names, and the extension "abc" of "Now1" is also used for the convenience of explanation, and corresponds to the data format (example: mp3, wma, etc.) of the type that can be reproduced by the HDD portable player 10a.

For example, assume that the content of which the user 19a wants to inform the user 19b is a content 3. The user allows the name of the content 3 to be displayed on the color LCD 14 of the HDD portable player 10a, operates the predetermined operation keys 16, and specifies the content 3. The HDD portable player 10a associates the specified content 3 with now1.abc. Then, it transmits the information about the tree structure shown in FIG. 4 to the HDD portable player 10b.

The HDD portable player 10b analyzes the information about the tree structure transmitted from the HDD portable player 10a, and displays a list based on the tree structure on the color LCD 14 of the HDD portable player 10b. The user 19b detects the container named "now" from the list displayed on the color LCD 14 of the HDD portable player 10b, detects the music piece named "now1" in the container, and issues an indication to reproduce the music piece. Thus, a request to transmit data of the music piece named "now1" is transmitted from the HDD portable player 10b to the HDD portable player 10a.

When the HDD portable player 10a receives from the HDD portable player 10b a request to transmit the data of the music piece now1, the HDD portable player 10a determines that it is a request to transmit the data of the content 3 based on the association stored in advance, and stream-distributes the data of the content 3 to the HDD portable player 10b.

Thus, the user 19b can reproduce and recognize a favorite music piece of the user 19a by his or her HDD portable player 10b.

In addition to the system of using the above-mentioned list information, a system of using an extension tag can also be adopted. An extension tag is regulated as a user definition in the network protocol applied to the data to be transmitted from the HDD portable player 10a to the HDD portable player 10b. When a user-defined extension tag is used, both the HDD portable players 10a and 10b have to correctly interpret the description in the extension tag to perform a corresponding process.

An extension tag, for example, <kenwood:now> can be defined in the XML of the ITEM of the CDS (content directory service) in the UPnP AV in the UPnP standard as an example of a network protocol, and described therein. According to the standard, the contents of the description can be included and transmitted in the header of the data in the transmission of the information in the list information format from the HDD portable player 10a to the HDD portable player 10b, and interpreted by the HDD portable player 10b, and the HDD portable player 10b can be designed such that the HDD portable player 10b can perform various corresponding processes. Therefore, the name for specification of the music piece specified by the user 19a as a music piece to be reported to the user 19b, and the name of the artist etc. can be described in the extension tag.

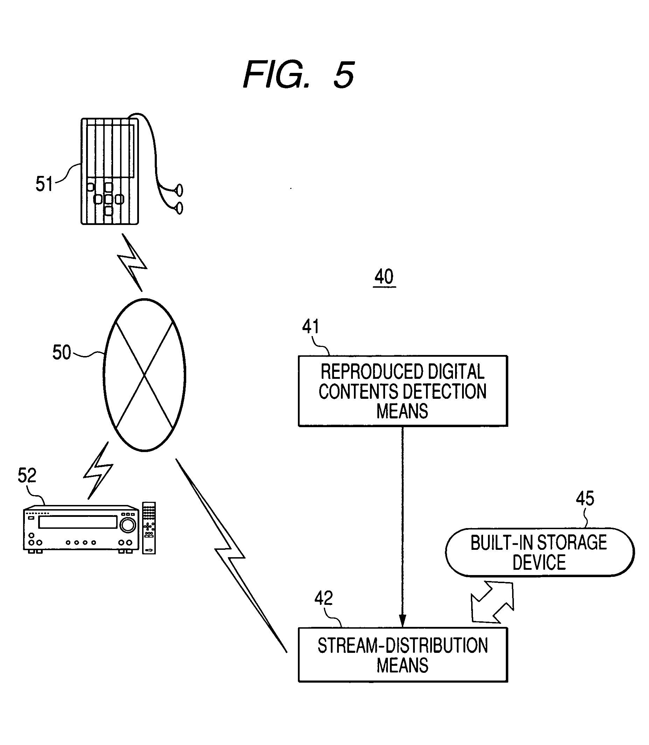

FIG. 5 is a block diagram of a media server device 40. The media server device 40 can individually reproduce a music piece stored in a built-in storage device 45. The media server device 40 can stream-distribute digital contents to the network player 51 for reproduction in a network player 51 during connection to the network.

Reproduced digital contents detection means 41 detects a music piece currently being reproduced. Stream-distribution means 42 stream-distributes to a predetermined network player 51 the data for reproduction of the music piece currently being reproduced as a notification music piece by the network player 51.

An example of the media server device 40 is an HDD portable player 10a. An example of the built-in storage device 45 is a built-in HDD of the HDD portable player 10a, but the built-in storage device 45 can be another non-volatile storage device than the HDD. An example of a network 50 is the network 26, and the network 50 is generated in the home 21, the vehicle 22, etc. An example of the network player 51 is the HDD portable player 10b. The HDD portable player 10b is described as having a server function as with the HDD portable player 10a in FIG. 3, but the server function can be omitted in the network player 51.

In the media server device 40, a digital content refers to, for example, a music piece or a picture (moving picture or still image). The connection of the media server devices 40 and 51 to the network 50 can be made by cable or by wireless. The network 50 is designed in, for example, the home 21 or the vehicle 22 (FIG. 2).

Thus, a user of the media server device 40 can notify, for example, an acquaintance as a passenger of the digital contents being reproduced in the media server device 40 of the user by reproducing the contents on the network player 51 of the acquaintance.

The stream-distribution means 42 stream-distributes the data of the notification music piece from, for example, the header, the start of the musical bridge, or substantially the current reproduction point.

When the data is stream-distributed from the header of the notification music piece, the network player 51 reproduces the entire notification music pieces on the network player 51. The technology of extracting the musical bridge of digital contents disclosed by, for example, the Japanese Patent Application Laid-Open No. 2004-233965 is utilized.

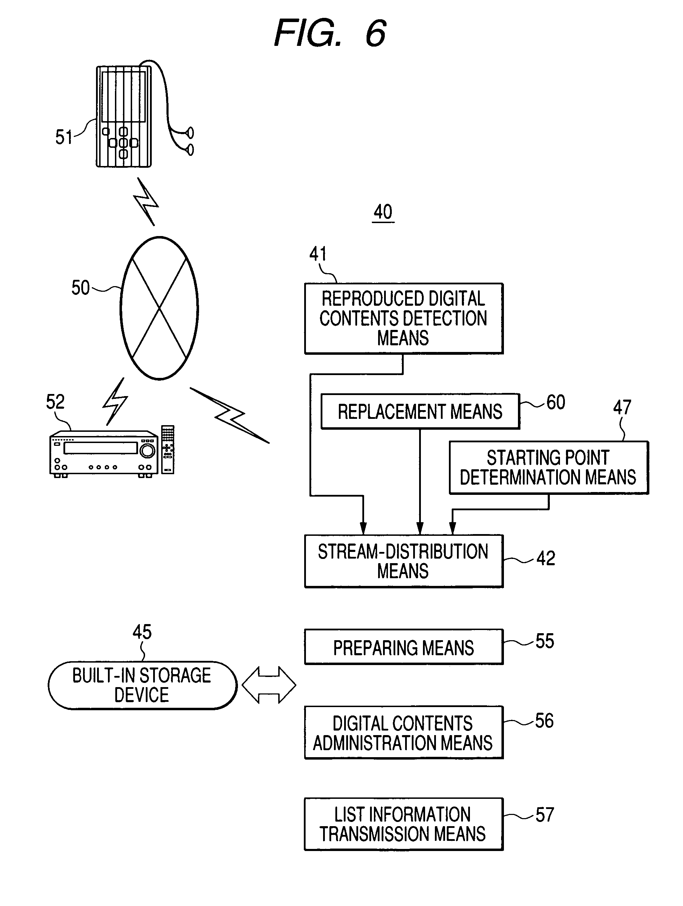

FIG. 6 is a more practical example of the media server device 40 shown in FIG. 5. The media server device 40 can further include starting point determination means 47, preparing means 55, digital contents administration means 56, list information transmission means 57, and replacement means 60.

The starting point determination means 47 determines based on the user's indication at which reproduction point the notification music piece is to be stream-distributed to the network player 51. The stream-distribution means 42 stream-distributes to the network player 51 the data from the starting point determined based on the user's indication. Thus, the user of the media server device 40 can select the reproduction point at which the stream-distribution to the network player 51 is to start from among, for example, the header, the start of the musical bridge, or the substantially current reproduction point of the notification music piece.

The preparing means 55 administers each of the stored digital contents in the built-in storage device 45 as the digital contents in the corresponding container of the containers in the tree structure. The preparing means 55 generates a virtual digital content (example: Now. abc shown in FIG. 4) associated with the notification music piece in the tree structure. The digital contents administration means 56 transmits the list information relating to the tree structure to a predetermined network player 51. When the list information transmission means 57 accepts a request to transmit the data of the virtual digital contents from the network player 51, it stream-distributes the data of the digital contents associated with the virtual digital contents to the network player 51.

As described above, according to the communication protocol adopted in the DLNA network in the content directory service (CDS) defined in the UPnP AV Protocol, the stored digital content information in the media server device 40 received by the network player 51 from the media server device 40 is not in an optional format, but is restricted to the information format of displaying on the network player 51 a list of the digital contents stored in the media server device 40. Under the restrictions, the network player 51 correctly receives from the media server device 40 the stored digital content information in the media server device 40, selects from the list the digital contents specified by an owner of the media server device 40 as a favorite content etc., and issues to the media server device 40 a request to transmit the data about the digital contents, thereby reproducing the digital contents in the network player 51 without any problems.

It is desired that the replacement means 60 replaces a notification music piece with a dummy of the music piece currently being reproduced at a user's indication.

The media server device 40 may not like to notify a user of the network player 51 of the music piece being reproduced depending on a specific case, and as a countermeasure against the case, the replacement is performed. The dummy can be selected by the user from among the stored digital contents of the built-in storage device 45 each time, or can be set in advance.

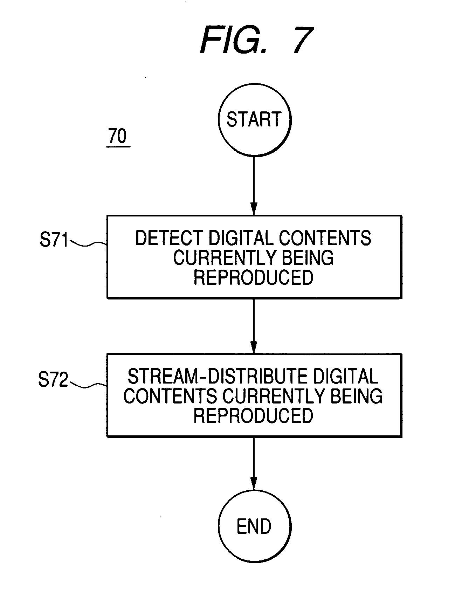

FIG. 7 is a flowchart of a media server control method 70. The media server device according to the media server control method 70 can be, for example, the media server device 40. The media server device 40 can individually reproduce a music piece stored in the built-in storage device 45 as described above, and can stream-distribute the digital contents to the network player 51 for the reproduction in the network player 51 during connection to the network.

In S71, a music piece currently being reproduced is detected. In S72, the music piece currently being reproduced is used as a notification music piece, and the data for the notification music piece to be reproduced by the network player 51 is stream-distributed to the network player 51.

In S72, data can be stream-distributed from the header, the start of the musical bridge, or the substantially current reproduction point of the notification music piece.

Between S71 and S72, S73 (not shown in the attached drawings) can be added. In S73, the reproduction starting point at which the notification music piece is to be stream-distributed to the network player 51 is determined based on the user's indication. Then, in S72, the data from the starting point determined based on the user's indication is stream-distributed to the network player 51.

The user's indication is not limited to the media server device 40. A user of the network player 51 can select "all data (from the header)", "musical bridge", or "current reproducing point" based on the list.

Independent of S71 and S72, S75 (not shown in the attached drawings) can be added. In S75, the stored digital contents in the built-in storage device are administered as the digital contents in the corresponding container in the containers in the tree structure. Then, S77 and S79 (not shown in the attached drawings) can be added between S71 and S72. In S77, the virtual digital contents associated with the notification music piece are generated in the tree structure. In S79, the list information relating to the tree structure is transmitted to a predetermined network player 51. In S72, when a request to transmit the data of the virtual digital contents is accepted from the network player 51, the data of the digital contents associated with the virtual digital contents is stream-distributed to the network player 51.

It is desired that S81 (not shown in the attached drawings) is prepared immediately after S71, and the notification music piece is replaced with a dummy of the music piece currently being reproduced at a user's indication in S81.

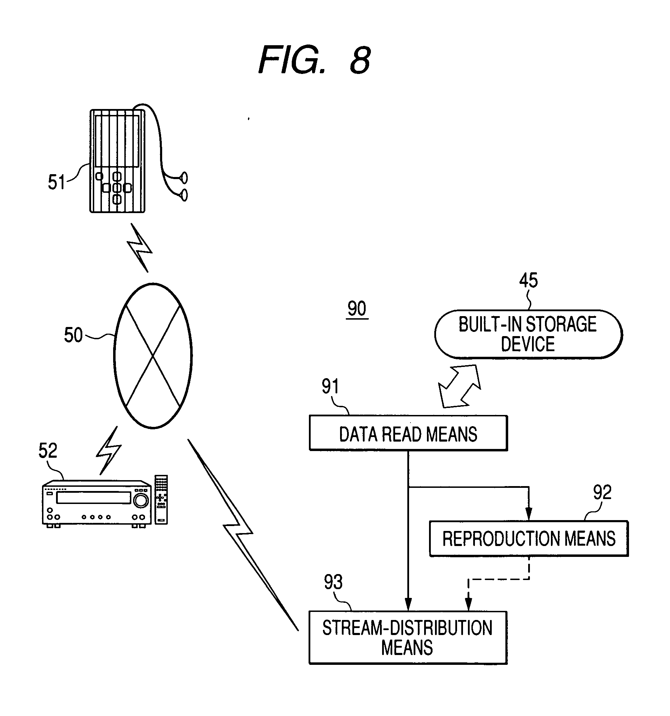

FIG. 8 is a block diagram of a media server device 90. The media server device 90 can individually reproduce the digital contents stored in the built-in storage device 45. The media server device 90 can also stream-distribute the digital contents to the network player 51 for reproduction in the network player 51 during connection to the network. The media server device 90 includes data read means 91, reproduction means 92, and stream-distribution means 93.

The data read means 91 reads from the built-in storage device 45 the data of the digital contents relating to the reproduction individually in the media server device 90 (= self-reproduction). The reproduction means 92 reproduces the digital contents individually through the media server device 90 based on the data read from the built-in storage device 45 as the data of the digital contents relating to the reproduction individually in the media server device 90. The stream-distribution means 93 stream-distributes the data read from the built-in storage device 45 to the network player 51 as the data of the digital contents relating to the reproduction in the media server device 90.

The stream-distribution means 93 can receive the data read from the built-in storage device 45 as the data of the digital contents relating to the reproduction individually in the media server device 90 directly from the data read means 91, or through the reproduction means 92. In the user operation, when the reproduction means 92 performs fast forward, fast return, pause, etc. on the digital contents being self-reproduced by a user of the media server device 90, the data portion of the digital contents read from the built-in storage device 45 with time by the data read means 91 correspondingly changes. Thus, the network player 51 network-reproduces the same digital contents as the digital contents self-reproduced by the media server device 90, and performs the fast forward, fast return, pause, etc. in synchronization with the fast forward, fast return, pause, etc. of the digital contents in the media server device 90.

Thus, although the "point just being listened to (when the digital contents refer to a music piece)" by the user of the media server device 90 changes with time, the user of the network player 51 can share the state of "listening to the same music piece (when the digital contents refer to a music piece) together" with the user of the media server device 90.

The technical idea of the media server devices 40 and 90 can be concretely represented as a program. That is, the program directs a computer to function as each means of the media server device 40 or 90. The technical idea of the media server control method 70 can also be concretely represented as a program. That is, the program directs the computer to perform each step of the media server control method 70.

The best modes for carrying out the present invention are described above, but the present invention is not limited to the modes, but can be obviously realized in various modes within the gist of the present invention.

## Claims

1. A media server device capable of individually reproducing digital contents stored in a built-in storage device, which allows the stream-distribution of digital contents to a network player for reproduction in the network player during connection to the network, the media server device comprising:
reproduced digital contents detection means for detecting digital contents currently being reproduced; and
stream-distribution means for stream-distributing data for reproducing notification digital contents by a network player using currently reproduced digital contents as the notification digital contents to a predetermined network player.

2. The media server device according to claim 1, wherein the stream-distribution means stream-distributes data of the notification digital contents from a header, a start of a musical bridge, or substantially current reproduction point.

3. The media server device according to claim 1 or 2, further comprising:
starting point determination means for determining based on a user's indication at which reproduction starting point the notification digital contents are to be stream-distributed to a network player; and
the stream-distribution means for stream-distributing data from the starting point determined based on the user's indication to a network player.

4. The media server device according to any of claims 1 to 3, further comprising:
digital contents administration means for administering each of stored digital contents in the built-in storage device as a digital content in a corresponding container in containers in a tree structure;
preparing means for preparing virtual digital contents associated with notification digital contents in the tree structure;
list information transmission means for transmitting list information relating to the tree structure to a predetermined network player; and
stream-distribution means for receiving a request to transmit data of the virtual digital contents from the network player, and then stream-distributing to the network player data of digital contents associated with the virtual digital contents.

5. The media server device according to any of claims 1 to 4, further comprising
replacement means for replacing the notification digital contents with a dummy of digital contents currently being reproduced at a user's indication.

6. A media server device capable of individually reproducing digital contents stored in a built-in storage device, which allows the stream-distribution of digital contents to a network player for reproduction in the network player during connection to the network, the media server device comprising:
data read means for reading data of digital contents relating to the reproduction of contents individually by a media server device from the built-in storage device;
reproduction means for allowing the media server device to individually reproduce digital contents based on the data read from the built-in storage device as data of the digital contents relating to the reproduction individually by the media server device; and
stream-distribution means for stream-distributing to a network player the data read from the built-in storage device as data of the digital contents relating to the reproduction individually by the media server device.

7. A method of controlling a media server device capable of media server device individually reproduce digital contents stored in a built-in storage device, which allows the stream-distribution of digital contents to a network player for reproduction in the network player during connection to the network, the method comprising the steps of:
detecting digital contents currently being reproduced; and
stream-distributing data for reproducing notification digital contents by a network player using the currently reproduced digital contents as the notification digital contents to a predetermined network player.

8. A program used to cuase a computer to function as each means of the media server device according to any of claims 1 to 6.
